# DEMANDE DE BREVET EUROPEEN

(11) **EP 0 581 628 A1**
(43) Date de publication de la demande: **02.02.1994**
(21) Numéro de dépôt: 93401718.7
(22) Date de dépôt: 02.07.1993
(51) Int. Cl.: A01G 25/16

(54) **Vanne de commande automatique de distribution d'eau, en particulier pour l'irrigation de plantes en pots**

(30) Priorité: 29.07.1992 FR 9209370
(71) Demandeur: HUTCHINSON, F-75008 Paris (FR)
(72) Inventeur: Buchy, Philippe, F-38170 Seyssinet (FR)
(74) Mandataire: Ramey, Daniel

(57) **Abrégé**

Vanne de commande automatique de distribution d'eau, en particulier pour l'irrigation de plantes en pots, comprenant une pièce de support (10) formée d'une cage moulée en matière plastique et recevant un élément gonflant (14) formé par un cylindre de bois plein sensible à l'humidité environnante, ladite cage comprenant une languette élastiquement déformable (26) par laquelle l'élément gonflant (14) vient comprimer et obturer, lors de sa dilatation, un conduit souple (12) d'amenée d'eau.

## Description

L'invention concerne une vanne de commande automatique de distribution d'eau, en particulier pour l'irrigation de plantes en pots en fonction des besoins en eau de ces plantes.

Les vannes connues de ce type comprennent en général un élément gonflant sensible à l'humidité, le plus souvent en bois, qui est associé dans un boîtier de support à un conduit souple d'amenée d'eau, de façon à ce que la dilatation et la contraction de l'élément gonflant en fonction de l'humidité environnante provoquent respectivement l'obturation par écrasement et l'ouverture du conduit souple d'amenée d'eau. Le boîtier de support est par exemple plus ou moins enfoncé dans la terre dans laquelle poussent les plantes, ou placé au fond d'un cache-pot de façon à ce que l'élément gonflant soit mouillé ou humidifié plus ou moins directement par l'eau d'irrigation des plantes, et sèche par évaporation de l'eau au contact de l'air ambiant.

Les vannes connues de ce type présentent un certain nombre d'inconvénients. Il est en effet nécessaire de régler de façon précise la position de l'élément gonflant par rapport à celle du conduit souple d'amenée d'eau, pour obtenir des cycles souhaités d'irrigation des plantes. Cela impose des essais longs et répétés des vannes après immersion dans l'eau. On constate que les vannes pré-réglées en usine présentent des défauts de fonctionnement, allant parfois jusqu'au non-fonctionnement. Les tolérances de fabrication sont très serrées, avec des risques importants de défauts de qualité. Les éléments gonflants ont souvent des formes assez complexes, ce qui impose un usinage particulier et augmente le coût de fabrication. Ces vannes connues sont réalisées par assemblage plus ou moins complexe de plusieurs éléments, ce qui augmente également le coût de fabrication. En outre, les durées de séchage des éléments gonflants sont en général trop courtes (quelques heures), ce qui impose plusieurs périodes d'irrigation par jour.

L'invention a pour but d'éviter ces inconvénients de la technique antérieure.

Elle a pour objet une vanne de commande automatique de distribution d'eau, en particulier pour l'irrigation de plantes en pots, qui soit de fabrication simple et peu coûteuse, qui ne nécessite pas une tolérance élevée de fabrication, qui ne nécessite pas non plus de réglage préalable et qui permette en outre un allongement de la durée de séchage de l'élément gonflant, pour réduire le nombre journalier de cycles d'irrigation.

L'invention propose donc à cet effet une vanne de commande automatique de distribution d'eau, en particulier pour l'irrigation de plantes en pots, comprenant une pièce de support d'un conduit souple d'amenée d'eau et d'un élément gonflant, par exemple en bois, dont la dilatation est fonction de l'humidité environnante et qui est agencé dans la pièce de support pour provoquer par sa dilatation l'obturation par écrasement du conduit souple, cette vanne étant caractérisée en ce que la pièce de support comporte une languette élastiquement déformable sur laquelle agit l'élément gonflant lors de sa dilatation.

Cette languette élastiquement déformable a plusieurs fonctions :
- elle permet d'absorber une dilatation de l'élément gonflant qui continue à se produire après obturation du conduit souple d'amenée d'eau, ce qui évite les réglages préalables auparavant nécessaires dans la technique antérieure,
- elle évite également les détériorations du conduit souple, résultant de son écrasement trop important par l'élément gonflant,
- elle peut former un levier de démultiplication de déplacement entre l'élément gonflant et le conduit souple, ce qui permet d'obtenir une obturation du conduit souple pour une très faible dilatation de l'élément gonflant,
- elle permet ainsi une réduction de la durée des périodes d'irrigation et une augmentation de la durée entre les périodes d'irrigation,
- son interposition entre le conduit souple et l'élément gonflant simplifie la fabrication de la pièce de support et l'assemblage de la vanne, et permet ainsi une réduction des coûts de fabrication.

Selon une autre caractéristique de l'invention, la pièce de support est une cage en matière plastique moulée d'une seule pièce avec la languette élastiquement déformable.

La vanne selon l'invention est alors constituée de trois éléments : la cage en matière plastique, l'élément gonflant et le conduit souple d'amenée d'eau.

Il en résulte une économie de fabrication et de montage.

Avantageusement, l'élément gonflant est un cylindre de bois plein.

Il en résulte également une économie de fabrication, ainsi qu'une augmentation des durées de séchage de cet élément, et une réduction correspondante du nombre journalier de cycles d'irrigation.

L'invention sera mieux comprise et d'autres caractéristiques, détails et avantages de celle-ci appa- raitront plus clairement à la lecture de la description qui suit, faite à titre d'exemple en référence aux dessins annexés dans lesquels :
la figure 1 est une vue schématique en perspective de la pièce de support et du conduit souple d'amenée d'eau d'une vanne selon l'invention;
la figure 2 est une vue schématique en perspective de l'élément gonflant;
les figures 3 et 4 sont des vues schématiques de la vanne selon l'invention, illustrant son fonctionnement.

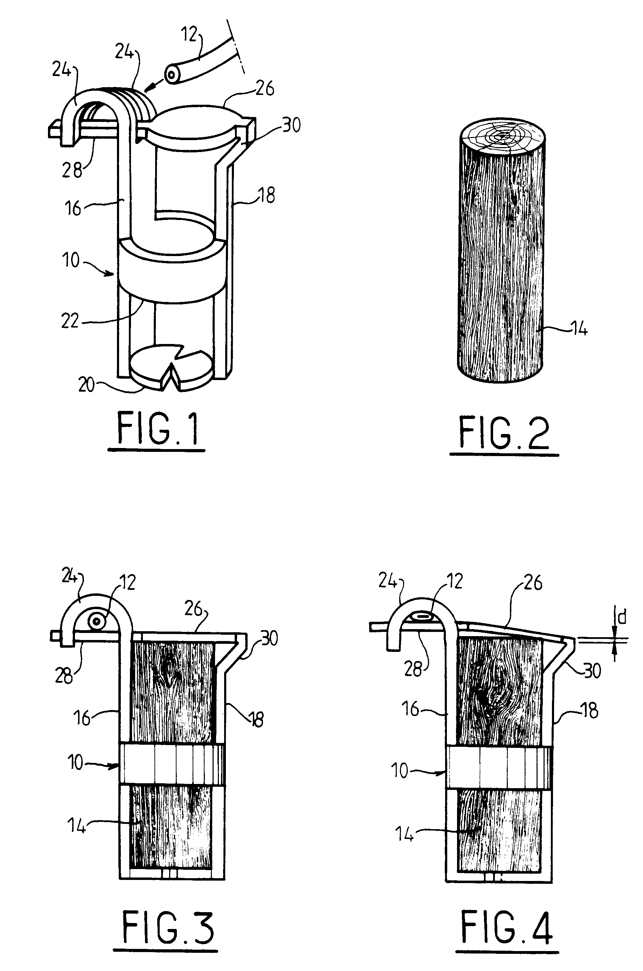

Comme représenté schématiquement dans les figures 1 et 2, la vanne selon l'invention comprend une pièce de support 10, un conduit souple 12 d'amenée d'eau, et un élément gonflant 14 sensible à l'humidité environnante, qui est un cylindre de bois plein.

La pièce de support 10 est une cage moulée d'une seule pièce en matière plastique et est de forme générale cylindrique, avec des dimensions correspondant à celles de l'élément gonflant 14.

Plus précisément, la pièce de support 10 comprend deux montants parallèles 16 et 18, qui sont réunis entre eux à leur extrémité inférieure par un fond ajouré 20, et dans leur partie médiane par un anneau ou une bague cylindrique 22.

A sa partie supérieure, le montant 16, plus large que le montant 18, comporte deux bras parallèles 24 incurvés en arc de cercle, dont la concavité est orientée vers le bas, et qui sont recourbés vers l'extérieur du logement cylindrique de l'élément gonflant 14 dans la pièce de support 10.

L'autre montant 18 se termine à son extrémité supérieure par une languette élastiquement déformable 26 qui s'étend perpendiculairement aux montants 16 et 18 pour former la paroi supérieure du logement de l'élément gonflant 14 et dont l'extrémité libre 28 s'étend entre les bras recourbés 24 pour délimiter avec ces derniers un logement de forme semi-cylindrique dans lequel est reçu le conduit souple 12 d'amenée d'eau. La partie de la languette 26 qui forme la paroi supérieure du logement de l'élément gonflant 14, est par exemple constituée par un disque circulaire, comme représenté en figure 1. Par ailleurs, la languette 26 est raccordée à l'extrémité supérieure du montant 18 par un bras coudé 30 sensiblement en forme de V dont le sommet est orienté vers l'extérieur de la pièce de support 10.

La fabrication et l'assemblage de la vanne selon l'invention sont très simples : la pièce de support 10 est en matière plastique moulée d'une seule pièce et l'élément 14 est un cylindre de bois plein que l'on peut introduire dans la pièce support 10 en soulevant légèrement la languette élastiquement déformable 26. L'élément 14 repose alors sur le fond 20 de la pièce 10 et son extrémité supérieure vient sensiblement au contact de la languette élastiquement déformable 26, sans la soulever, lorsque l'élément 14 est sec. Le diamètre du logement de l'élément 14 dans la pièce support 10 est supérieur à celui de l'élément 14 à l'état sec, pour permettre sa dilatation radiale par humidification.

Lorsque la vanne selon l'invention doit être utilisée, elle est légèrement enfoncée dans la terre d'un pot de plantes ou d'une jardinière, ou bien disposée sur le fond d'un cache-pot contenant le pot de plantes ou la jardinière et destiné à recevoir l'eau d'irrigation des plantes. Le conduit souple 12 est alors amené dans son logement formé par les bras recourbés 14 et l'extrémité libre de la languette 28, les dimensions de ce logement étant telles que le conduit 12 y est maintenu sans compression lorsque l'élément gon- fiant 14 est sec, comme représenté en figure 3.

Au contact de l'eau, l'élément 14 gonfle et se dilate radialement et axialement. Sa dilatation axiale déplace vers le haut la languette élastiquement déformable 26 qui vient alors comprimer et écraser le conduit souple 12, comme représenté en figure 4, pour interrompre la distribution d'eau par ce conduit. La languette 26 constitue un bras de levier qui démultiplie la dilatation axiale de l'élément gonflant 14, l'importance de cette démultiplication étant fonction de la longueur du bras coudé 30. Ainsi, une faible dilatation axiale d de l'élément gonflant 14 se traduit par un déplacement beaucoup plus important de l'extrémité libre 28 de la languette 26, et donc par une obturation rapide du conduit souple 12. La dilatation de l'élément 14 se poursuit ensuite et se traduit par un fléchissement de la languette 26, qui absorbe ainsi cette dilatation supplémentaire de l'élément 14 sans comprimer outre mesure le conduit souple 12.

Inversement, au séchage de l'élément 14, la languette souple 26 commence par suivre la contraction axiale de l'élément 14 sans ouvrir le conduit 12 puis libère ce dernier et permet une nouvelle distribution d'eau uniquement à la fin du séchage de l'élément 14.

La durée des périodes de non-irrigation est ainsi augmentée, et celle des périodes d'irrigation est réduite, sans qu'il soit nécessaire de procéder à des réglages.

Diverses variantes peuvent être apportées au mode de réalisation qui a été décrit et représenté. Par exemple, la paroi de fond 20 de la pièce support 10 peut constituer elle aussi une languette élastiquement déformable, par exemple lorsqu'elle est raccordée à un seul des montants 16 et 18 et se termine à proximité immédiate de l'autre montant.

Dans une autre variante, on pourrait disposer le conduit souple d'amenée d'eau au-dessus de l'élément gonflant, au lieu de le disposer à côté de cet élément comme représenté aux dessins, et prévoir alors une languette élastiquement déformable en forme de U ou de V.

## Revendications

1. Vanne de commande automatique de distribution d'eau, en particulier pour l'irrigation de plantes en pots, comprenant une pièce (10) de support d'un conduit souple (12) d'amenée d'eau et d'un élément gonflant (14), par exemple en bois, dont la dilatation est fonction de l'humidité environnante et qui est agencé dans la pièce de support pour provoquer par sa dilatation l'obturation par écrasement du conduit souple, caractérisée en ce que la pièce de support (10) comporte une languette élastiquement déformable (26) sur laquelle agit l'élément gonflant (14) lors de sa dilatation.

2. Vanne selon la revendication 1, caractérisée en ce que ladite languette (26) comporte une partie d'extrémité libre (28) en appui sur le conduit souple (12) d'amenée d'eau, et une partie d'extrémité opposée sur laquelle agit l'élément gonflant lors de sa dilatation.

3. Vanne selon la revendication 1 ou 2, caractérisée en ce que la languette élastiquement déformable (26) forme un levier de démultiplication de déplacement entre l'élément gonflant (14) et le conduit souple (12).

4. Vanne selon l'une des revendications précédentes, caractérisée en ce que la pièce de support est une cage en matière plastique moulée d'une seule pièce avec la languette élastiquement déformable.

5. Vanne selon l'une des revendications précédentes, caractérisée en ce que ladite languette (26) est raccordée à la pièce de support (10) par un bras (30) coudé en V dont le sommet est orienté vers l'extérieur.

6. Vanne selon l'une des revendications précédentes, caractérisée en ce que la pièce de support (10) comprend un logement semi-cylindrique de réception du conduit souple (12) et dans lequel pénètre l'extrémité libre (28) de la languette élastiquement déformable (26) pour venir comprimer et obturer le conduit souple sous l'effet de la dilatation de l'élément gonflant (14).

7. Vanne selon la revendication 6, caractérisée en ce que le logement semi-cylindrique de réception du conduit souple (12) est formé par deux bras parallèles (24) incurvés en arc de cercle de la pièce de support, ladite languette (26) s'étendant entre ces bras parallèles.

8. Vanne selon l'une des revendications précédentes, caractérisée en ce que l'élément gonflant 14 est un cylindre de bois plein.
